(19) Europäisches Patentamt
European Patent Office
Office européen des brevets

(11) Veröffentlichungsnummer: **0 364 796 A2**

# (12) EUROPÄISCHE PATENTANMELDUNG

(21) Anmeldenummer: **89118147.1**

(22) Anmeldetag: **30.09.89**

(51) Int. Cl.5: **C08L 69/00 , G11B 7/24 , //(C08L69/00,69:00)**

(30) Priorität: **15.10.88 DE 3835203**

(43) Veröffentlichungstag der Anmeldung: **25.04.90 Patentblatt 90/17**

(84) Benannte Vertragsstaaten: **DE FR GB IT NL**

(71) Anmelder: **BAYER AG**

**D-5090 Leverkusen 1 Bayerwerk(DE)**

(72) Erfinder: **Berg, Klaus, Dr.**
**Hansastrasse 124**
**D-4150 Krefeld(DE)**
Erfinder: **Weymans, Günther, Dr.**
**Karl-Arnold-Strasse 4**
**D-5090 Leverkusen(DE)**
Erfinder: **Grigo, Ulrich, Dr.**
**Michelsheide 9**
**D-4152 Kempen 3(DE)**
Erfinder: **Bottenbruch, Ludwig, Dr.**
**Wöhlerstrasse 5**
**D-4150 Krefeld 1(DE)**

## (54) Formmassen aus Polycarbonat-Mischungen hoher disperser Löslichkeit.

(57) Die Erfindung betrifft halogenfreie binäre Mischungen aus zwei vollaromatischen Polycarbonaten mit einer dispersen Löslichkeit von jeweils zwischen 18 und 35 $(J/ccm)^{1/2}$, wobei beide Polycarbonate hochmolekular sind und jeweils nicht mehr als 70 Mol.-% Bisphenol A enthalten. Weiterhin ist Gegenstand der vorliegenden Erfindung die Verwendung dieser Mischungen für optische Datenspeicher sowie Formteile, die aus den Mischungen hergestellt sind.



Xerox Copy Centre

## Formmassen aus Polycarbonat-Mischungen hoher disperser Löslichkeit

Die Erfindung betrifft halogenfreie binäre Mischungen aus zwei vollaromatischen Polycarbonaten mit einer dispersen Löslichkeit von jeweils zwischen 18 und 35 $(J/ccm)^{1/2}$, wobei beide Polycarbonate hochmolekular sind und jeweils nich mehr als 70 Mol.-% Bisphenol A enthalten.

Die erfindungsgemäßen Mischungen sind aufgrund ihrer niedrigen Doppelbrechung als Substrate für optische Datenspeicher geeignet, da solche Mischungen sich zur Herstellung von Formkörpern mit besonders niedriger Doppelbrechung in tangentialer und radialer Richtung zur Plattenfläche eignen.

Gegenstand der vorliegenden Erfindung ist somit auch die Verwendung dieser Mischungen für optische Datenspeicher sowie die Formteile selbst, die aus den Mischungen hergestellt sind.

Binäre Mischungen aus einer Reihe verschiedener vollaromatischer Polycarbonate sind aus der Literatur bekannt.

Beispielsweise berichtet die US-PS 3 855 277 von flammwidrigen Mischungen aus einem halogenhaltigen niedermolekularen Polycarbonat mit einem gegebenenfalls strukturmodifizierten Polycarbonat. Halogenfreie Polycarbonatmischungen werden hier nicht beschrieben.

Aus der US-PS 3 890 266 sind Abmischungen zweier vollaromatischer Polycarbonate bekannt, die eine herausragende Flammfestigkeit haben. Einer der Mischpartner ist entweder reines Bisphenol-A-Polycarbonat oder ein halogenhaltiges Cokondensat.

Aus der US-PS 4 140 730 sind Polycarbonat-Abmischungen mit einem Halogengehalt von mehr als 5 Gew.-% bekannt, die eine gute Flammfestigkeit haben.

Aus der US-PS 4 081 495 sind Abmischungen von bekannten Polycarbonaten mit oligomeren Polycarbonaten mit bestimmten Endgruppen bekannt. Die oligomeren Polycarbonate haben ein gewichtsgemitteltes Molekulargewicht zwischen 1.200 und 9.000 g/mol.

Aus der US-PS 4 186 154 sind halogenfreie Polycarbonat-Mischungen bekannt, wobei wenigstens einer der Mischpartner zu mindestens 80 Mol.-% Bisphenol-A enthält. Diese Mischungen haben ein gutes Verarbeitungsverhalten.

In der US-PS 3 166 606 werden Polycarbonat-Abmischungen mit verbesserter Drucksensitivität beschrieben. Die Harze sind zusammengesetzt aus 10 bis 90 Gew.-% hochmolekulares Polycarbonat mit einer reduzierten Viskosität von mehr als 0,6 und 90 bis 10 Gew.-% eines niedermolekularen Polycarbonats mit einer reduzierten Viskosität von höchstens 0,5. Im besonderen sind hier Abmischungen mit Bisphenol-A Polycarbonat und Copolyestern genannt. Über die optischen Eigenschaften der Mischungen sind hier keine Hinweise zu entnehmen.

Aus der US-PS 3 334 154 sind flammwidrige Polycarbonat-Mischungen bekannt, die zu 30 bis 1 Gew.-% ein Tetrabrom-Bisphenol-A-haltiges Polycarbonat enthalten.

Aus der DOS 2 709 389 sind glasfaserverstärkte Halogenbisphenolethylen-haltige Polycarbonatmischungen bekannt, die angeblich flammwidrig sind und eine hohe Izod-Kerbschlagzähigkeit haben sollen.

In der JA 49-034-549 werden flammwidrige Polycarbonat-Mischungen beschrieben, von denen ein Mischpartner Bisphenol-A-Polycarbonat, der zweite ein halogenhaltiges Polycarbonat ist, wobei der Mischung ein Fettsäuresalz eines Metalls der zweiten Gruppe des Periodensystems zugegeben wird.

Aus der DOS 2 602 179 sind Polycarbonat-Abmischungen eines halogenhaltigen mit einem nichthalogenhaltigen Polycarbonat bekannt, die ein gutes Fließverhalten haben und flammwidrig sind.

Aus der JA 49-053 942 sind blasverformbare Polycarbonat-Abmischung aus Bisphenol-A-Polycarbonat mit 1,1-Bis(4-hydrosyphenyl)cyclohexan-Polycarbonat bekannt.

In der JA 49-115 146 werden Wasserdampf-undurchlässige Harzmassen beschrieben, die neben Bisphenol-A-Polycarbonat und 1,1-Bis(4-hydroxyphenyl)cyclohexan-Polycarbonat ein Polyester enthalten.

Aus der JA 60-004 550 sind Polycarbonat-Mischungen bekannt aus einem bekannten Polycarbonat wie zum Beispiel Bisphenol-A-Polycarbonat, Glaskugeln, -flocken oder -fasern und einem 2 bis 15 wiederholende Einheiten eines speziellen oligomeren Polycarbonats. Formkörper aus diesen Mischungen sollen Oberflächen haben, auf denen Tinten und Farbstoffe gut haften.

Aus der JA 60-008 356 sind Abmischungen von Bisphenol-A-Polycarbonat mit 1,1-Bis(4-hydroxyphenyl)1-phenylethan bekannt, die verbesserte mechanische Eigenschaften als die einzelnen Polycarbonate haben sollen.

Aus der US-PS 3 809 676 sind thermisch farbstabile, flammfeste Polycarbonat-Mischungen bekannt, die halogenartige Polycarbonate enthalten.

In den bisher genannten Patentschriften wird die Verwendung der Mischungen für optische Anwendungen sind beschrieben.

In der JA 61-078 864 werden Polycarbonatblends beschrieben, die als Mischpartner einmal aus a) aus

konventionellen Diphenolen hergestellten Polycarbonaten und zum anderen b) Polycarbonatharzen aus konventionellen Diphenolen, die bestimmte langkettige Alkylendgruppen aufweisen, beschrieben. Die Molekulargewichte der Harzmassen liegen zwischen 13.000 und 20.000 g/mol. Die Blends sollen eine hervorragende Schmelzfließfähigkeit haben und daher zur Herstellung von optischen Formteilen wie zum Beispiel Digital Disc, Video Disc und Speicher-Disc geeignet sein. Nachteilig sind hier neben den Verfärbungen der Mischungen auch die - aufgrund des geringen Molekulargewichts verursachten - ungünstigen mechanischen Eigenschaften.

Von Grundwerkstoffen für optische Geräte werden nämlich mannigfaltige Fähigkeiten verlangt; so müssen sie beispielsweise nicht nur eine ausgezeichnete Transparenz, Hitzebeständigkeit, Feuchtigkeitsbeständigkeit und mechanische Festigkeit haben, sondern zugleich auch in den optischen Eigenschaften hervorragend sein. Aus diesem Grunde besteht ein hoher Bedarf an Harzen, die diesen Anforderungen genügen.

Die Information optischer Datenträger wird mit dem linear polarisierten Licht eines Lasers gelesen und im Falle beschreibbarer Datenspeicher auch eingeschrieben. Eines der Systeme für beschreib- und löschbare Verfahren sind die magnetooptischen Datenspeicher: Hier muß besonderer Wert auf doppelbrechungsfreies Substratmaterial gelegt werden, da eine geringfügige Drehung (unter 1 Grad) der Licht-Schwindungsebene schon als Signal gelesen wird.

Doppelbrechung setzt sich aus Kunststoffen (Thermoplasten) im wesentlichen aus 2 Faktoren zusammen: Einer materialspezifischen Komponente einerseits und einem verarbeitungsbedingten Anteil, der auch als Orientierungsdoppelbrechung bezeichnet wird, andererseits. Doppelbrechungsarme, thermoplastische Formteile können somit durch zweierlei Maßnahmen hergestellt werden, entweder durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder durch den Einsatz von Material, das von sich aus nur geringe Neigung zur Doppelbrechung zeigt, wie beispielsweise Polymethylacrylate, welche für die Herstellung von Video-Discs verwendet werden.

Beschreibbare Speicherverfahren wie z.B. magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib-und Leseoptik bedingt, bekommt eine möglichst geringe optische Anisotropie auch für den Strahlenverlauf in tangentialer und radialer Richtung erhebliche Bedeutung. So zeigen Compact Discs, die in achsialer Richtung bereits sehr niedrige Gangunterschiede der Doppelbrechung (unter 10 nm/mm) aufweisen, tangential und radial noch hohe Meßwerte, typischerweise um 500 bis 1000 nm/mm.

Aus der Dissertation B. Hahn, TH Darmstadt, 1983, S. 35 ff sind allgemeine Lehren zum Handeln zur Erniedrigung der Doppelbrechung von Formmassen bekannt. Danach kann man durch Kombination eines Materials mit positiver optischer Anisotropie wie z.B. PVDF mit einem Material mit negativer optischer Doppelbrechung wie z.B. PMMA in Form einer verträglichen, d.h. auf molekularer Ebene homogenen Polymermischung Doppelbrechung reduzieren. Abmischungen von Polycarbonaten mit einer dispersen Löslichkeit zwischen 18 und 35 $(J/ccm)^{1/2}$ werden nicht beschrieben. Das Verarbeitungsverhalten der PVDF/PMMA-Abmischungen ist außerdem nicht befriedigend.

Aus der US-PS 4 373 065 ist ebenfalls eine Lehre bekannt, nach der man vollständig mischbare Polymere mit gegensätzlicher Doppelbrechung mischt und dadurch eine molekulare Kompensation der Doppelbrechung erreicht. Als besondere Beispiele sind die Mischungen aus Polyphenylenoxid und Polystyrol genannt. Nachteilig sind allerdings die Verfärbungen dieser Systeme. Außerdem sind Polycarbonatmischungen mit einer dispersen Löslichkeit zwischen 18 und 35 $(J/ccm)^{1/2}$ nicht genannt.

Aus der JA 84/141 138 sind Polymermischungen mit ungefähr gleichen Brechungsindizes wie z.B. Polycarbonat/SMA bekannt, die - weil die Brechungsindizes ungefähr gleich sind - transparent sind. Die Systeme sind relativ unverträglich und haben den entscheidenden Nachteil, daß die Doppelbrechungs-Absenkung entlang eines Formteils inhomogen ist. Den technischen Anforderungen der optischen Datenspeicher genügen diese Systeme daher nicht.

Nach dem in Janeschitz-Kriegl, Polymer Melt Rheology and Flow Birefringence, Springer Verlag 1983 beschriebenen Verfahren wird zur Charakterisierung der Doppelbrechung eine Polymerschmelze durch Scherung in einem Kegel-Platte-Rheometer orientiert. Man mißt während der Drehbewegung die Doppelbrechung mit einem Laserstrahl durch den Plattenspalt, also in radialer Richtung. Durch die Schergeschwindigkeit D wird unter Mitwirkung der Schmelzviskosität $\eta$ eine Schubspannung erzeugt. Diese Schubspannung bewirkt Doppelbrechung. Man erhält dann aus der Beziehung

$$\Delta n = \frac{2c}{\sin 2X} \cdot \eta \cdot D$$

Die Doppelbrechung. Dabei ist X der Auslöschungswinkel. Dieser Winkel kann direkt mit der polarisationsmikroskopischen Meßanordnung gemessen werden. Man bestimmt zunächst isotherm für verschiedene Temperaturen T die Funktion $\Delta n(D)$. Der Wert der Schmelzviskosität $\eta$ wird zur selben Temperatur aus dynamisch-mechanischen Messungen mit Hilfe der Cox-Merz-Regel errechnet. Daraus erhält man dann die optische Konstante C, die für verschiedene Werte D und T ähnliche Werte ergibt und daher eine Konstante darstellt, die die Doppelbrechungshöhe der Formmasse charakterisiert. Mischungen mit sehr kleiner optischer Konstante C haben die gewünschten optischen Eigenschaften.

Die Löslichkeit von Polymeren hängt von drei Beiträgen ab, nämlich der Löslichkeit, die die Wechselwirkung mit polaren Gruppen beschreibt, der Löslichkeit, die Wasserstoffbrücken-Bindung berücksichtigt, und der dispersen Löslichkeit, die die Beiträge disperser Kräfte beschreibt. Die Löslichkeitsparameter von Polymeren können nicht direkt gemessen werden. Da man aber die Löslichkeitsparameter von sehr vielen niedermolekularen Materialien kennt, kann man durch die z.B. in: C.M. Hansen, Journal of Paint Technology, Vol 39, (1967), S. 104 ff beschriebenen Verfahren die polaren, wasserstoffbrückenbindenden und dispersen Löslichkeitsparameter der Polymere bestimmen. Bei der Bestimmung der Löslichkeitsparameter soll für die folgende Charakteristik ausschließlich diese dreidimensionale Abhängigkeit der Löslichkeit (polar, dispers, wasserstoffbrückenbindend) betrachtet werden. Die quantitativen Werte für die Löslichkeits-Charakterisierung können auch mit der in: Van Krevelen, "Properties of Polymers", Elsevier Scientific Publishing Company Amsterdam, 1976, Seiten 141 ff beschriebenen Inkrementenmethode berechnet werden. Soweit in dieser Referenz (unter Berücksichtigung der Tabelle VII, S. 590 und der Beziehung (4.5) Seite 64) die Inkremente für die Berechnung der drei Anteile des Löslichkeitsparameters genannt sind, beziehen sich die Löslichkeitswerte ausschließlich auf nach dieser Inkrementenmethode berechnete Werte, andernfalls werden sie nach dem oen genannten Hansen-Verfahren experimentell bestimmt.

Der Gegenstand der vorliegenden Erfindung ist unseres Erachtens durch den zitierten Stand der Technik weder vorweggenommen noch nahegelegt.

Es hat sich nun gezeigt, daß halogenfreie binäre hochmolekulare Polycarbonat-Abmischungen mit geringem Bisphenol-A-Gehalt und einer dispersen Löslichkeit zwischen 18 und 35 $(J/ccm)^{1/2}$ herausragende optische Eigenschaften haben und daher Verwendung finden können, z.B. als Substrate für optische Datenspeicher.

Gegenstand der vorliegenden Erfindung sind somit halogenfreie binäre Mischungen aus zwei vollaromatischen Polycarbonaten mit einer relativen Viskosität (gemessen in Methylenchlorid bei der Polymerkonzentration von c = 5 g/l bei T = 25 °C) von jeweils mehr als 1,16, bevorzugt mehr als 1,2, und jeweils einem molaren Anteil von Bisphenol-A - bezogen auf den Bisphenol-Gehalt jedes einzelnen Polycarbonats - von nicht mehr als 70 Mol.-%, bevorzugt nicht mehr als 30 Mol.-%, dadurch gekennzeichnet daß die disperse Löslichkeit jedes der Polycarbonate zwischen 18 und 35 $(J/ccm)^{1/2}$, bevorzugt 18 und 26 $(J/ccm)^{1/2}$, besonders bevorzugt zwischen 18,5 und 22 $(J/ccm)^{1/2}$ liegt. Gegebenenfalls kann die disperse Löslichkeit eines der Mischpartner zwischen 18,5 und 23 (J/ccm) liegen, während die disperse Löslichkeit des anderen Partners zwischen 18 und 35 $(J/ccm)^{1/2}$ liegt.

Als Mischungspartner erfindungsgemäß geeignete Polycarbonate sind z.B. aromatische Polycarbonate mit einem mittleren Molekulargewicht Mw von mehr als 20.000 g/mol, soweit die relative Viskosität größer als 1,16 ist. Die Mischungen können sich in beliebiger Weise aus den beiden aromatischen Polycarbonaten mit hoher disperser Löslichkeit zusammensetzen. Zum Beispiel können zwischen 5 und 95 Gew.-% eines Polycarbonats mit einer Glastemperatur unter 150 °C und zwischen 95 und 5 Gew.-% eines Polycarbonats mit einer Glastemperatur oberhalb 150 °C verwendet werden. Geeignet sind insbesondere Mischungen, bei denen sich die relative Viskosität der beiden Polycarbonat-Mischpartner um nicht mehr als 0,4 unterscheidet. Es kann aber auch von Vorteil sein, eine Komponente aus dem aromatischen Polycarbonat mit einer relativen Viskosität zwischen 1,16 und 1,3, die andere Komponente mit einer relativen Viskosität zwischen 1,25 und 2,8 zu verwenden.

Als erfindungsgemäße Polycarbonate kommen Homopolycarbonate auf Basis allgemeiner - zweiwertiger - p,p'-verknüpfter Phenole in Frage sowie beliebige Cokondensate auf Basis von Gemischen aus diesen Phenolen, soweit die disperse Löslichkeit - nach der Inkrementenmethode bzw. (wenn Inkremente nicht bekannt sind) nach dem Hansen-Verfahren gemessen - zwischen 18 und 35 $(J/ccm)^{1/2}$ liegt und jedes der Polycarbonate nicht mehr als 70 Mol.-% Bisphenol-A enthält. Diese Cokondensate können statistische Cokondensate oder Blockcokondensate sein. Man kann auch verzweigte Polycarbonate verwenden, wenn

der molare Gehalt an Verzweigern - bezogen auf den Bisphenol-Gehalt -nicht größer als 3 Mol.-% ist.

Solche Polycarbonate enthalten insbesondere Bisphenole der allgemeinen Formel (I)

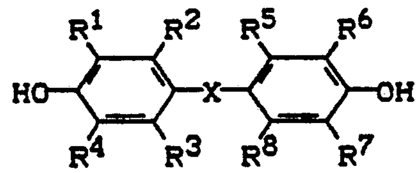

(I)

in welcher $R^1$ bis $R^8$ unabhängig voneinander sind und verschieden oder gleich sein können und jeweils zwischen 0 und 40 C-Atome, O bis 5 S-, O-, N-Atome enthalten oder H sind, wobei die disperse Löslichkeit zwischen 18 und 35 $(J/ccm)^{1/2}$ liegt. Die zweiwertige Gruppe X enthält zwischen 0 und 5 S-, O-, N-Atome, zwischen 0 und 40 C-Atome oder ist speziell $-SO_2$, -O-, -S-, -CO-.Bevorzugt werden zweiwertige Reste X, die der allgemeinen Formel (II) genügen, in der wenigstens einer der Reste $R^9$ bzw. $R^{10}$ wenigstens eine ggf. substituierte Aryl-Verbindung enthält.

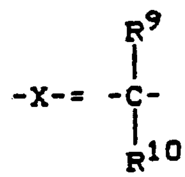

(II)

Die genannten Bisphenole eignen sich für die Herstellung der für die erfindungsgemäßen Mischungen geeigneten Polycarbonate, wenn die disperse Löslichkeit dieser Polycarbonate zwischen 18 und 35 $(J/ccm)^{1/2}$ liegt.

Die Bisphenole selbst sind dem Fachmann bekannt. Sie sind beispielsweise in US 3 028 365, US 2 999 835, US 3 148 172, US 2 991 273, US 3 271 367, US 2 999 846, DOS 1 570 703, DOS 2 063 050, DOS 2 063 052 beschrieben.

Die Herstellung der erfindungsgemäßen Mischungen kann beispielsweise durch Compoundierung bei der Extrusion, die Verarbeitung der Mischungen zu Formkörpern - bzw. zu Datenspeichern - erfolgt beispielsweise durch Spritzguß.

Es muß als außerordentlich überraschend gelten, daß die erfindungsgemäßen Mischungen so herausragende rheologische und optische Eigenschaften haben, weil Mischungen zwischen vollaromatischen Polycarbonaten üblicherweise entweder trübe Formteile ergeben, zu Verfärbungen führen oder nicht die geforderten optischen Eigenschaften haben.

Die nachstehenden Beispiele erklären nochmals eingehend die erfindungsgemäßen Mischungen sowie die technologischen Vorteile der daraus hergestellten Formteile.

## Beispiele

Zur Herstellung der erfindungsgemäßen Mischungen werden folgende Ausgangssubstanzen synthetisiert:

### Substanz 1

Polycarbonat auf Basis des Bisphenols der Formel (I) (2,2′-Bis-(3-Phenyl-4-hydroxyphenyl)propan)

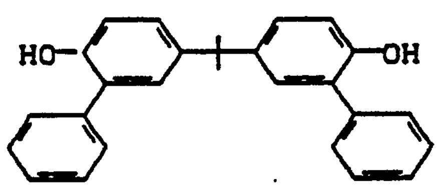

(I)

Substanz 2

Polycarbonat auf Basis des Bisphenols der Formel (II) (2,2'-Bis-(4-Hydroxyphenyl)1-phenylethan)

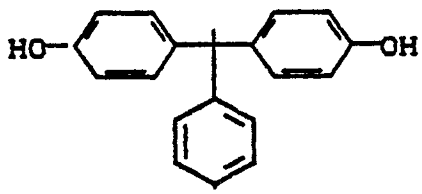

(II)

Substanz 3

Polycarbonat auf Basis des Bisphenols der Formel (III) (Bisphenol-A)

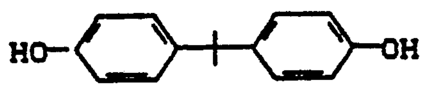

(III)

Die Homopolycarbonate wurden nach dem in H. Schnell, "Chemistry and Physics of Polycarbonates", Polymer Review, Vol. 9, Seite 13 ff, Interscience Publ. 1964 beschriebenen Phasengrenzflächenverfahren in bekannter Weise hergestellt.

Man erhält die in der Tabelle I angegebenen physikalischen/analytischen Werte. Dabei ist Mw das in THF gemessene gewichtsgemittelte Molekulargewicht (Einheiten: g/mol), Tg die mit Hilfe der Differentialkalorimetrie (DSC) bei einer Aufheizrate von 20 K/min gemessene Glastemperatur (gemessen in Celsius) und C die nach dem in Janeschitz-Kriegl, Polymer Melt Rheology and Flow Birefringence, Springer-Verlag 1983, gemessene optische Konstante (Einheiten: 10**(-9)*qm/Newton). Die relative Viskosität (Eta-rel) wurde bei einer Polymerkonzentration von 5 g/l Methylenchlorid im Vergleich zu Methylenchlorid bei T = 25 °C gemessen. Weiterhin faßt die Tabelle I in der letzten Spalte die disperse Löslichkeit der drei Polycarbonate zusammen (gemessen in Einheiten J/ccm)$^{1/2}$).

Tabelle 1

| Charakterisierung der Substanzen 1 bis 3 | | | | | | |
|---|---|---|---|---|---|---|
| Substanz-Nr. | Bisphenol-A-Anteil in Mol-% | Mw | Tg | C | Etarel | Löslichkeit |
| 1 | 0 | 37 700 | 139 | 1,2 | 1,24 | 19,3 |
| 2 | 0 | 31 000 | 185 | 1,3 | 1,21 | 18,7 |
| 3 | 100 | 28 500 | 146 | 3,2 | 1,28 | 17,5 |

Vergleichsbeispiel

Dieses Beispiel zeigt, daß man durch Abmischen eines Polycarbonats mit hohem Bisphenol-A-Anteil mit einem Polycarbonat einer dispersen Löslichkeit zwischen 18 und 35 (J/ccm)$^{1/2}$ nicht die technologischen Vorteile erhält.

2 g der Substanz 1 wurden mit 8 g der Substanz 3 in Methylenchlorid innig gemischt und die Lösung eingedickt. Anschließend wurde eine Gießfolie einer Dicke von 0,15 mm gezogen. Diese Folie wurde mehrere Stunden bei 80 °C unter Vakuum getempert, dabei wurde das ausdampfende Methylenchlorid

kontinuierlich abgesaugt. Die Folie war trübe. An dem so durchmischten Material wurde die Konstante C gemessen:
Ergebnis: 3,0* 10**(-9) qm/Newton.

Beispiel

Dieses Beispiel verdeutlicht den technischen Vorteil, den man erhält, wenn man halogenfreie vollaromatische binäre Polycarbonat-Mischungen hoher disperser Löslichkeit herstellt, von denen keines einen Bisphenol-A-Anteil von mehr als 70 Mol.-% enthält und die beide eine relative Lösungsviskosität von mehr als 1,16 haben.

2 g der Substanz 1 wurden in Methylenchlorid mit 18 g der Substanz 2 lösungsgemischt und aus der eingedickten Lösung eine Folie mit einer Dicke von 0,1 mm gezogen.

Nach 3 Minuten Tempern der Folie bei 185° C wurde die Folie auf Raumtemperatur abgekühlt. Eine Trübung war nicht feststellbar. Die DSC-Messung ergab eine einphasiges System mit einer Glastemperatur von 183° C. Aus dem Material der getemperten Folie, die nach Vakuumbehandlung bei etwa 80° C und einer Lagerzeit von 4 Stunden im wesentlichen lösungsmittelfrei war, wurde die optische Konstante C gemessen. Bei der Herstellung der Probenkörper für die rheo-optische Messung wurde darauf geachtet, daß die Probenherstelltemperatur in keinem Fall 278° C überschritt. Man erhält einen Wert für C von 0,9* 10**(-9) qm/Newton.

**Ansprüche**

1. Halogenfreie binäre Mischungen aus zwei vollaromatischen Polycarbonaten mit einer relativen Viskosität (gemessen in Methylenchlorid, c = 5 g/l bei 25° C) von jeweils mehr als 1,16 und jeweils einem molaren Anteil von Bisphenol-A - bezogen auf den Bisphenol-Gehalt jedes einzelnen Polycarbonats -von nicht mehr als 70 Mol.-%, dadurch gekennzeichnet, daß die disperse Löslichkeit jedes der Polycarbonate zwischen 18 und 35 $(J/ccm)^{1/2}$ liegt.

2. Mischungen nach Anspruch 1, dadurch gekennzeichnet, daß die disperse Löslichkeit jedes der beiden Mischpartner zwischen 18 und 26 $(J/ccm)^{1/2}$ liegt.

3. Mischungen nach Anspruch 1, dadurch gekennzeichnet, daß die disperse Löslichkeit einer der beiden Mischpartner zwischen 18,5 und 23 $(J/ccm)^{1/2}$ liegt.

4. Mischungen nach Anspruch 1, dadurch gekennzeichnet, daß die disperse Löslichkeit beider Mischpartner zwischen 18,5 und 22 $(J/ccm)^{1/2}$ liegt.

5. Mischungen nach Anspruch 1 bis 4, dadurch gekennzeichnet, daß die relative Viskosität (gemessen in Methylenchlorid, c = 5 g/l bei 25° C) beider Mischpartner mindestens 1,2 beträgt.

6. Mischungen nach Anspruch 1 bis 5, dadurch gekennzeichnet, daß der molare Anteil an Bisphenol-A in beiden Mischpartnern - jeweils bezogen auf den Bisphenol-Gehalt der jeweiligen Polycarbonate - nicht größer als 30 Mol.-% ist.

7. Mischungen nach Anspruch 1 bis 6, dadurch gekennzeichnet, daß wenigstens einer der beiden Mischpartner wenigstens zu 20 Mol.-% Bisphenole mit seitenständigen Aromaten enthält.

8. Verwendung der Mischungen nach Anspruch 1 bis 7, zur Herstellung von Formteilen für optische Medien.

9. Formteile aus den nach Anspruch 1 bis 7 hergestellten Mischungen.